(19) Europäisches Patentamt

European Patent Office

Office européen des brevets

(11) Publication number: **0 263 621 B1**

## (12) EUROPEAN PATENT SPECIFICATION

(45) Date of publication of patent specification: **22.07.92**   (51) Int. Cl.⁵: **G01N 21/55**

(21) Application number: **87308443.8**

(22) Date of filing: **24.09.87**

The file contains technical information submitted after the application was filed and not included in this specification

(54) Method of and apparatus for real-time crystallographic axis orientation determination.

(30) Priority: **30.09.86 US 913437**

(43) Date of publication of application:
**13.04.88 Bulletin  88/15**

(45) Publication of the grant of the patent:
**22.07.92 Bulletin  92/30**

(84) Designated Contracting States:
**DE FR GB IT NL**

(56) References cited:
**DE-A- 3 202 060**
**US-A- 2 423 357**
**US-A- 4 526 468**

**APPLIED OPTICS, vol. 20, no. 10, 15th May 1981, pages 1758-1763, Optical Society of America, New York, US; B.L. SOPORI: "Optical diffraction techniques for determination of crystal orientations"**

**ZEITSCHRIFT FÜR METALLKUNDE, vol. 57, no. 4, April 1966, pages 281-287, Stuttgart, DE; H. GENGNAGEL et al.: "Lichtfiguren, ihre Entstehung und Anwendung zum Orientieren von Kristallen"**

(73) Proprietor: **Weiser, Sidney**
**414 Mississippi Avenue**
**Silver Spring Maryland 20910(US)**

(72) Inventor: **Weiser, Sidney**
**414 Mississippi Avenue**
**Silver Spring Maryland 20910(US)**

(74) Representative: **Ouest, Barry et al**
**M'CAW & Co. 41-51 Royal Exchange Cross Street**
**Manchester M2 7BD(GB)**

## Description

### Background of the Invention

This invention is in the field of crystallographic axis determination methods and apparatuses. It is particularly concerned with a method and apparatus that allows such determination easily and in real time. There are various ways in which one can determine the crystallographic orientation of crystal materials. One of the oldest is probably the Laue method, in which a collimated X-ray beam is directed through a material and which produces a diffraction pattern on photographic film. Unfortunately, this method takes about 15-20 minutes to perform. Another method uses low-angle X-ray diffraction (reflection) following Bragg's Law; this method involves manual manipulations of a crystal sample to determine optimum reflectance angles, and calculation of angular deviation components. Yet another method is an optical method using a light beam reflected from an abraded or etched crystal surface. The light reflected from the surface makes a pattern on a screen; adjustment of the center of the pattern to a zero reference point gives indications of crystallographic orientation. Both of these last two methods are described in ASTM Designation: F26-84, "Standard Methods For Determining the Orientation of a Semiconductor Single Crystal". Furthermore, in Applied Optics, vol.20, no.10, 15th May 1981, pages 1758-1763, Optical Society of America, New York, US an apparatus is described comprising the features of the preamble of Claim 1. The instant invention operates in real time, requires no manual manipulations or calculations, and has a greater accuracy than the known methods.

### Summary of the Invention

This is a method of and apparatus for determining crystallographic orientation. The method includes the general steps of generating a laser beam and reflecting it from an essentially planar crystal surface in a substantially spiral scanned pattern and of detecting the amount of beam reflected in a particular direction as the beam scans. A pattern of reflectance is obtained from which the orientation may be determined. The apparatus includes a laser, devices for steering the laser beam in a substantially spiral pattern, a reflective or refractive system for directing and focusing the beam onto a particular small spot on a crystal surface, a photodetector for detecting reflected beam radiation, and means for controlling the steering devices and for determining orientation from the photodetector output. By performing the orientation determination at a multiplicity of points or small spots on the crystal surface, the crystallographic orientation of the surface may be mapped.

### Brief Description of the Drawings

Figure 1 is a schematic showing of the inventive apparatus; and
Figure 2 shows typical reflectance patterns produced by the inventive apparatus.

### Description of Preferred Embodiments of Invention

The method of the invention includes the steps of generating a laser beam, steering the laser beam in a substantially spiral pattern about an axis through a crystal sample, directing and focusing the beam onto a small spot on the sample in another substantially spiral pattern, detecting reflected beam radiation in a particular direction, and determining crystallographic orientation of the sample from the pattern of reflected radiation.

It might be useful to define exactly what is meant by the term "substantially spiral" in this description. Depending on whether analog or digital beam steering is employed, slightly different patterns occur. For an analog system, the laser beam is initially directed onto the spot on the sample and is continuously rotated about an axis essentially perpendicular to the surface of the sample. As the beam rotates, its angle of incidence is continuously varied, from some high initial value to a lower value or conversely. A true spiral is achieved. For some angle of incidence, the reflected radiation will reach a maximum. For a digital system, the angle of incidence will be decreased or increased in stepwise small increments, such that the scan actually consists of a family of nested cones. The effect is essentially the same as if an analog change is used, if the increments are small enough; one might consider this step-wise spiral, but I intend the term "substantially spiral" to include it.

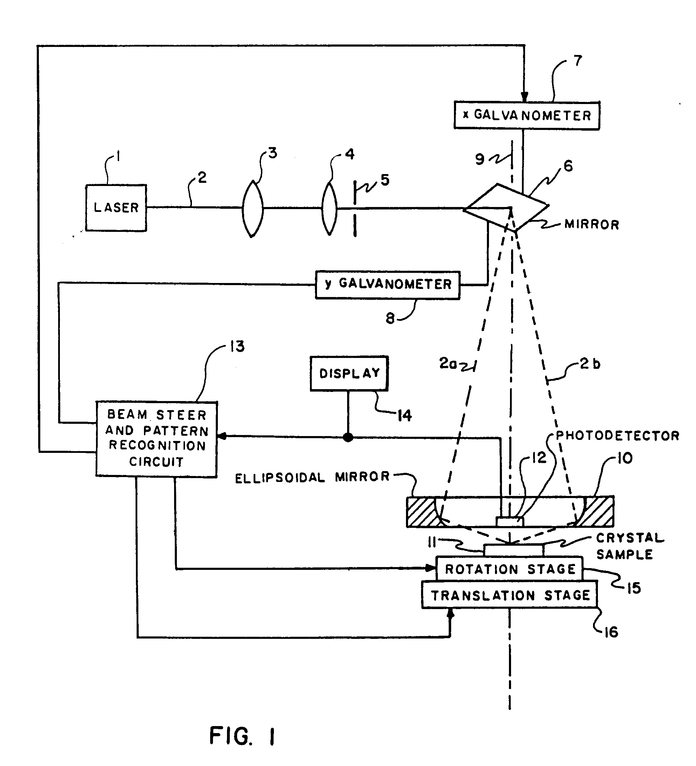

An apparatus for performing the inventive method, as shown schematically in Figure 1, includes a laser 1 producing a beam 2, a primary focusing lens 3 (if needed), a secondary focusing lens 4, an entrance pupil 5, and a mirror 6. The pupil 5 of lens 4 is used as one focal point of an ellipsoidal optical system which will be further described below. The mirror 6 is gimballed (or equivalent) about two arbitrary orthogonal axes (x and y) and may be separately pivoted about these axes by x and y galvanometers 7 and 8. The voltages applied to the galvanometers determine the pattern the beam makes about the axis 9; for 90° phase-displaced sine waves, both linearly changing in amplitude, the beam will be steered in a spiral about the axis 9. Two positions of the steered beam are shown as 2a and 2b. The steered beam is reflected and focused by an ellipsoidal mirror 10 onto a spot on crystal sample 11. This spot is small with respect to the area of sample 11. The mirror 10 forms the other portion of the ellipsoidal optical system mentioned above, and has a focal point that is made to fall on the surface of crystal sample 11. Beam radiation reflected in a lobed pattern from sample 11 is detected by photodetector 12, whose output is fed to a beam steer and pattern recognition circuit 13 and to a display device 14 (if desired). The crystal sample 11 may be in the form of a slab sawed from a boule, or may be a boule itself. In any event, the surface is abraded or etched to expose the characteristic surface pits and projections.

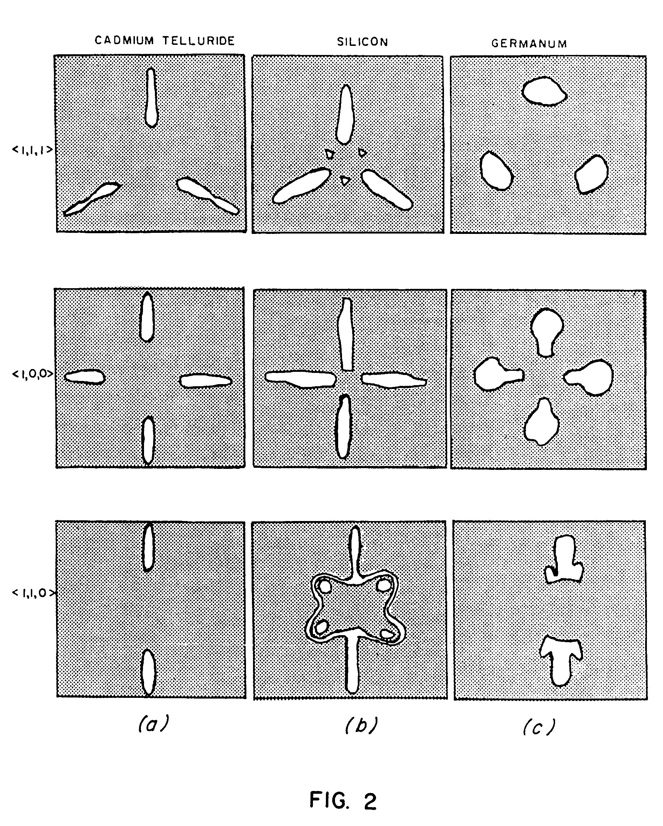

Circuit 13 includes a clock which controls the sine or other waveform generator, not shown, whose output is fed to the galvanometers 7 and 8. The output of the photodetector 12 is digitized in a digitizer (controlled by the clock) in the circuit 13 and is fed into a shift register also included therein and is configured as a ring counter and stepped by the clock. These steps are synchronized with the rotation of the laser beam. Using the information derived from the ring counter, a computer (not shown) can precisely calculate a quantitative value of the angular position of the pattern lobes, in real time. Pattern recognition may be done by AND gates, also included in the circuit 13, connected to appropriate taps on the shift register. These AND gates may drive light emitting diodes to indicate the number of lobes in the reflectance pattern from the sample. Display 14 may be an oscilloscope or other such device. It will show a pattern like those shown in Figure.2.

As can be seen in Figure 2, for a particular material and orientation, a lobed pattern with a particular number of lobes is produced. The direction of the lobes is indicative of the orientation direction. Columns (a), (b) and (c) of Figure 2 respectively illustrate <1, 1, 1>, <1, 0, 0> and <1, 1, 0> patterns for cadmium telluride, silicon and germanium.

The instant invention has a greatly improved signal-to-noise ratio compared to the optical method described above in the BACKGROUND OF THE INVENTION. That method uses a beam essentially perpendicular to the crystal sample surface and depends upon manual manipulation of the sample and visual observation. The beam is reflected in a lobed pattern. The improved signal-to-noise ratio in this invention is achieved by using a high angle of incidence of the scanning beam. The beam is reflected from diffuse portions of the crystal surface as though such portions are specular. Such reflections, which would act as noise if detected by photodetector 12, are at angles away from 12. The scanned beam which strikes etched pits, however, is reflected toward the photodetector 12. This results in a 40db or better improvement in signal-to-noise ratio.

While a specific embodiment of the invention has been set forth in this specification, other embodiments may be obvious to those skilled in the art, in light of the teachings herein. For example, galvanometers 7 and 8 may be replaced by piezoelectric crystals or the like. Moreover, mirror 6 may be replaced by two mirrors individually driven by separate galvanometers or equivalents. Further, it may be desirable in certain cases to scan the laser beam in a pattern other than a spiral. For example, a conical toroidal, or elliptical pattern may be desirable. Moreover, the circuit 13 may include a computer to control all the elements in 13 to achieve any desired scan pattern. A prototype of the invention makes use of a step-wise spiral as described above and with a beam spot size of approximately 1 mm. If desired, the beam, once the maximum reflectance angle is determined, may be continuously scanned at this angle to determine more accurately the maxima rotational positions.

Further, the crystal sample may be carried by a goniometric mount also controlled by the computer. This mount may include a rotation stage 15 and a translation stage 16, as shown in Figure 1, or their equivalents. Obviously, additional rotation stages may be employed, if it is desired to rotate the plane of the sample about one or more axes orthogonal to axis 9. In any event, the crystal sample may be moved with respect to axis 9 such that the beam effectively moves in a step-wise raster pattern over the surface of the sample, for mapping purposes. The mapping is done by determining the crystallographic orientation of a multiplicity of small spots on the sample surface. The raster pattern may be a planar spiral, or a series of parallel lines, etc. A further application of this invention is automated crystal cuttery equipment which derives its control information from the circuit 13 to cut or cleave single crystal segments of the desired orientation from a crystalline body when the body is properly oriented by the goniometric mount.

## Claims

1. A device for determining crystallographic orientation of an essentially planar crystal sample (11) including:

   means (1) for providing a laser beam (2);

   means (2-6, 10) for directing said beam as a spot onto a specific place on said sample (11), wherein said spot is small with respect to the area of said sample;

   means (12) for detecting that portion of said beam reflected in a particular direction from said material, whereby the beam is reflected different amounts for different incident directions in accordance with the crystallographic orientation of the crystal material to yield a particular reflectance pattern; and

means (13) for determining said orientation in accordance with said reflectance pattern;

characterised in that there is provided means (7, 8, 13) for moving said directed beam so that said sample (11) is scanned by said spot in a substantially spiral pattern (2a, 2b), and said means (13) for determining is operable to determine said crystallographic orientation in real time as said sample is scanned.

2. The device as set forth in claim 1 characterised in that said means for moving includes means (7, 8) for deflecting said beam (2) about orthogonal axes (x, y), and said means for directing includes means (10) for reflecting and focusing the deflected beam (2a, 2b) onto said specific place.

3. A method of determining crystallographic orientation of an essentially planar crystal sample (11), including the steps of:

generating a focused laser beam (2);

directing said laser beam (2) onto a small spot on said sample;

detecting reflected beam radiation from said spot in a particular direction; and

determining crystallographic orientation of said sample (11) from a pattern of reflected beam radiation,

characterised in that said beam is steered in a substantially spiral pattern (2a, 2b) about an axis (9) essentially perpendicular to the surface of said sample (11); and said determination of crystallographic orientation is determined in real time as said beam is steered in said pattern.

4. A method of mapping the planar surface of a crystal sample (11) for crystallographic orientation by determining the crystallographic orientation of a multiplicity of small spots on said surface in a predetermined pattern, wherein the determination at each spot is effected using the method of claim 3.

**Revendications**

1. Dispositif pour déterminer l'orientation cristallographique d'un échantillon (11) de cristal sensiblement plan comprenant :

- des moyens (1) pour fournir un faisceau laser (2) ;

- des moyens (2-6,10) pour diriger ledit faisceau en tant que spot sur un emplacement spécifique sur ledit échantillon (11), ledit spot étant petit par rapport à la surface dudit échantillon ;

- des moyens (12) pour détecter la portion dudit faisceau réfléchie dans une direction particulière à partir dudit matériau, le faisceau étant réfléchi à des niveaux différents pour des directions incidentes différentes en fonction de l'orientation cristallographique du matériau de cristal afin de réaliser un réseau particulier de facteurs de réflexion ; et

- des moyens (13) pour déterminer ladite orientation en fonction dudit réseau de facteurs de réflexion ;

caractérisé en ce que l'on prévoit des moyens (7,8,13) pour déplacer ledit faisceau dirigé de telle manière que ledit échantillon (11) est balayé par ledit spot suivant une configuration essentiellement en spirale (2a,2b) et en ce que lesdits moyens (13) de détermination peuvent fonctionner de manière à déterminer ladite orientation cristallographique en temps réel pendant que ledit échantillon est balayé.

2. Dispositif selon la revendication 1, caractérisé en ce que lesdits moyens de déplacement comprennent des moyens (7,8) pour dévier ledit faisceau (2) autour d'axes orthogonaux (x,y) et en ce que lesdits moyens de direction comprennent des moyens (10) pour réfléchir et focaliser le faisceau dévié (2a,2b) sur ledit emplacement spécifique.

3. Procédé pour déterminer l'orientation cristallographique d'un échantillon (11) de cristal sensiblement plan, comprenant les étapes suivantes :

- engendrer un faisceau laser focalisé (2) ;

- diriger ledit faisceau laser sur un petit spot sur ledit échantillon ;

- détecter le rayonnement du faisceau réfléchi à partir du spot selon une direction particulière; et

- déterminer l'orientation cristallographique dudit échantillon (11) à partir d'un réseau de rayonnement de faisceaux réfléchis,

caractérisé en ce que ledit faisceau est guidé selon une configuration essentiellement en spirale (2a,2b) autour d'un axe (9) qui est essentiellement perpendiculaire à la surface dudit échantillon (11) ; et en ce que la détermination de l'orientation cristallographique est déterminée en temps réel pendant que ledit faisceau est guidé dans ladite configuration.

4. Procédé de mappage de la surface plane d'un échantillon (11) de cristal pour l'orientation cristallographique en déterminant l'orientation cristallographique d'une multiplicité de petits spots sur ladite surface selon une configuration prédéterminée, dans lequel la détermination pour chaque spot est effectuée en utilisant le procédé selon la revendication 3.

**Patentansprüche**

1. Vorrichtung zum Bestimmen der kristallographischen Orientierung einer im wesentlichen planaren Kristallprobe (11), mit:

   einer Einrichtung (1) zur Schaffung eines Laserstrahls (2);

   einer Einrichtung (2-6, 10) zum Lenken des Strahls als Punkt auf eine bestimmte Stelle auf der Probe (11), wobei der Punkt relativ zu der Fläche der Probe klein ist;

   einer Einrichtung (12) zum Detektieren des in einer speziellen Richtung von dem Material reflektierten Bereichs des Strahls, wobei der Strahl nach Maßgabe der kristallographischen Orientierung des Kristallmaterials bei unterschiedlichen Einfallsrichtungen in unterschiedlichen Ausmaßen reflektiert wird und sich dadurch ein spezielles Reflexionsmuster ergibt; und

   einer Einrichtung (13) zum Bestimmen der Orientierung nach Maßgabe des Reflexionsmusters;

   dadurch gekennzeichnet, daß eine Einrichtung (7, 8, 13) zum derartigen Bewegen des gelenkten Strahls vorgesehen ist, daß die Probe (11) durch den Strahl in einem im wesentlichen spiraligen Muster (2a, 2b) abgetastet wird und daß die Bestimmungseinrichtung (13) beim Abtasten der Probe zum Bestimmen der kristallographischen Orientierung in Echtzeit ausgelegt ist.

2. Vorrichtung nach Anspruch 1,
   dadurch gekennzeichnet, daß die Bewegungseinrichtung eine Einrichtung zum Ablenken des Strahls (2) um orthogonale Achsen (x, y) beinhaltet und daß die Lenkeinrichtung eine Einrichtung (10) zum Reflektieren und Fokussieren des abgelenkten Strahls (2a, 2b) auf die spezielle Stelle aufweist.

3. Verfahren zum Bestimmen der kristallographischen Orientierung einer im wesentlichen planaren Kristallprobe (11), umfassend folgende Schritte:

   Erzeugen eines fokussierten Laserstrahles (2);
   Lenken des Laserstrahls (2) auf einen kleinen Punkt auf der Probe;

   Detektieren der von dem Punkt in einer speziellen Richtung reflektierten Laserstrahl-Strahlung; und

   Bestimmen der kristallographischen Orientierung der Probe (1) aufgrund eines Musters der reflektierten Laserstrahl-Strahlung,

   dadurch gekennzeichnet, daß der Strahl in einem im wesentlichen spiraligen Muster (2a, 2b) um eine zur Oberfläche der Probe (11) im wesentlichen senkrechte Achse (9) gesteuert wird; und daß die Bestimmung der kristallographischen Orientierung beim Steuern des Strahls in dem genannten Muster in Echtzeit erfolgt.

4. Verfahren zum Kartieren der planaren Oberfläche einer Kristallprobe (11) zur kristallographischen Orientierung durch Bestimmung der kristallographischen Orientierung einer Vielzahl kleiner Punkte auf der Oberfläche in einem vorbestimmten Muster, wobei die Bestimmung an jedem Punkt unter Verwendung des Verfahrens nach Anspruch 3 durchgeführt wird.

FIG. 1

FIG. 2